# EUROPEAN PATENT SPECIFICATION

(11) **EP 0 899 301 B1**
(45) Date of publication and mention of the grant of the patent: **20.06.2001**
(21) Application number: 98306838.8
(22) Date of filing: 26.08.1998
(51) Int. Cl.: C08L 67/02, C08K 9/04, C08K 3/38, C08K 3/32, C08K 5/49

(54) **Flame retardant polyester composition**
Flammgeschützte Polyesterzusammensetzung
Composition de polyester retardatrice aux flammes

(30) Priority: 28.08.1997 US 922128
(43) Date of publication of application: 03.03.1999
(73) Proprietor: GENERAL ELECTRIC COMPANY, Schenectady, NY 12345 (US)
(72) Inventor: Verhoogt, Hendrik, 4614 UV Bergen op Zoom (NL); De Moor, Johannes Jacob, 4623 BA Bergen op Zoom (NL); Khouri, Farid Fouad, Clifton park, New York 12065 (US); Takekoshi, Tohru, Scotia, New York 12302 (US)
(74) Representative: Szary, Anne Catherine, Dr.

(56) References cited:
- EP-A- 0 520 186
- EP-A- 0 757 073

## Description

This invention relates to polyester composition containing an effective amount of a non-halogen flame retardant.

Poly(butylene terephthalate) (PBT) is known to rapidly crystallize to high degree. This polymer has good solvent resistivity and fast molding cycles during injection molding. However, although the thermoplastic polyesters, particularly when reinforced with glass fibers as molding compositions, they burn readily and are difficult to render fire retardant.

U.S. patent 3,671,487 to Abolins describes the use of halogenated flame retardants and phosphorus compounds to render the polyester non-burning or self-extinguishing together with a polytetrafluoroethylene resin to render the polyester resin non-dripping (if burning). U.S. patent 4,344,878 to Dolce describes the utilization of halogen containing polycarbonate in mixtures with antimony oxide together with polytetrafluorethylene. In U.S. patent 5,554,674 to Hamilton, contains a halogenated flame retardant absent an antimony containing synergist wherein the flame retardant enhancing additive is a metal acid pyrophosphate.

Brominated flame retardants, which are well known in the art, have been particularly successful as flame retardant additives. However, because of the concern of the impact that bromine and other halogens might have on the environment, there is a definite need for alternative non-halogen flame retardant systems. In addition, such halogen containing compounds generate corrosive by products during processing or when exposed to fire which can result in damage to sensitive parts or micro chips, such as in a computer.

In marking, it is desirable to develop resin compositions which contain non-halogenated flame retardant additives without deleteriously affecting other desired properties of the resin.

Hence, the object act of this invention is to provide resin compositions containing non-halogenated ingredients with favorable modulus and impact strength, and ductility.

### Summary of the Invention

It is an object of the present invention to provide for non-halogen containing polyester resin having flame retardant properties.

According to the present invention, a flame retarded resin molding composition comprises a polyester resin and a non-halogen containing flame retarding combination of materials comprising at least one polymeric siloxane composition, a boron and phosphorus containing material and an organoclay for enhancing the flame retardant effect of said siloxane composition and said boron and phosphorus containing material. The preferred composition additionally includes a char forming agent such as a polycarbonate or polyphenylene ether resin. Most preferably, a portion of the organoclay is premixed with at least a portion of the polyester resin to form a master batch and the master batch is then mixed with the char forming resin and additional ingredients.

In the resin compositions of the present invention, the combination of ingredients are selected so that the final composition possesses desirable flame retardant properties. Additional, important properties include good mechanical properties, good processability, i.e. short cycle times, and good flow. Glass fibers are desirably added to the polyester component to enhance the strength properties.

In accordance with the principles of the present invention, flame retardancy is imparted primarily by a combination of materials comprising at least one polymeric siloxane composition and the boron and phosphate containing material.

The siloxane composition comprises a polysiloxane polymer. Typical polysiloxanes include polysiloxane homopolymer, polysiloxane and siloxane copolymers, including highly branched polysiloxane and siloxane copolymers.

Typical polysiloxane homopolymers include poly(dialkyl)siloxanes such as poly(dimethyl)siloxane and poly(diethyl)siloxane, poly(methylphenyl)siloxane, poly(diphenyl)siloxane, poly(perfluoroalkyl)siloxane, poly(diglycidoxy)siloxane, poly(vinylbenzyl)siloxane, poly(methylmethacryloxy)siloxane, poly(diaminoalkyl)siloxane, poly(divinylalkyl)siloxane, poly(dichloroalkyl)siloxane, and the like, poly (dialkyl-siloxane). The preferred poly (dialkyl-siloxane) which has the following formula: 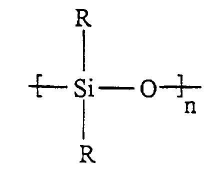 where R is alkyl of 1 to 6 carbon atoms. Preferably R is ethyl or methyl, and most preferably methyl. The n is selected so that the molecular weight of the polymer is preferably from about 50 to about 500.

Poly (dialkyl-siloxane) is available from GE Silicones and is marketed as SF 96-5 to SF 96-10,000 where the later number represents the viscosity in centipoise. The preferred viscosities are from about 50 to about 500 centipoise. The above commercially available varieties are alkyl stopped and have the following formula:

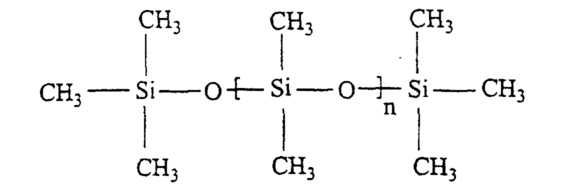

The polymeric siloxane compound utilized may be selected from the group of polysiloxane and siloxane copolymers, such as polyphenylene ether or polyetherimide siloxane copolymers. The polysiloxane compounds employed in the instant invention of this type are commercially available and are represented by the following formula: 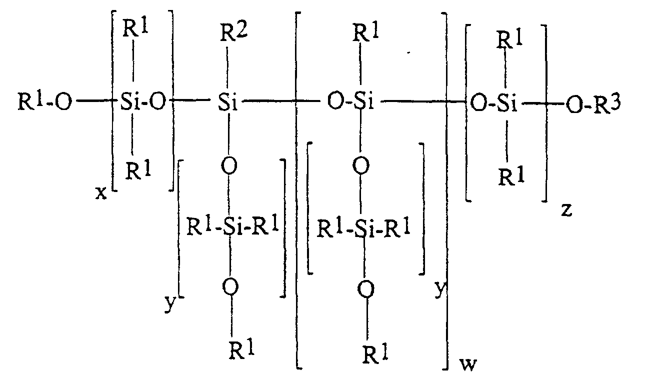 wherein each R1 is independently a C1-5 alkyl group and preferably a methyl group and R2 is a C1-5 alkyl group or a primary or secondary amino group such as a N-(2-aminoalkyl)-3-aminoalkyl group, provided that R2 is a C1-5 alkyl group when w is 1 and a N-(2-aminoalkyl)-3-aminoalkyl group when w is 0. It is often preferred that R2 is a methyl group or a N-(2-aminoethyl)-3-aminopropyl group. R3 is hydrogen or a C1-5 alkyl group, preferably a methyl group. W is 0 or 1 and x and y are each independently an integer from 1 to 7 and z is an integer from 0 to 7. It is noted herein that any combination of compounds represented by formula IV may be employed.

It is also within the scope of the invention to employ polysiloxanes represented by the formulae: 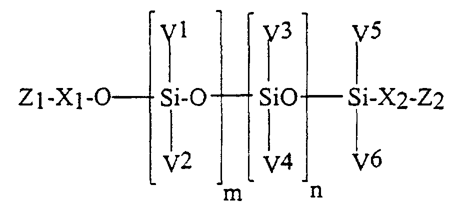 and 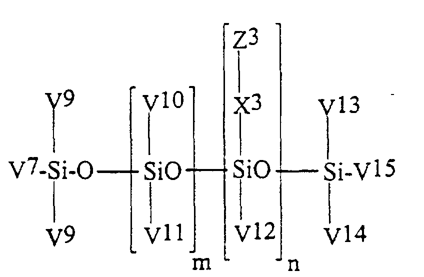 wherein m+n has a value of 5-2000, V1-V15, each independently of each other, represent a hydrogen atom or one of the following groups having 1-12 carbon atoms: alkyl, alkoxy, alkeneyl, aryl, aralkyl, alkylaryl, which groups may be halogenated; wherein X1, X2, X3, each independently of each other, represent one of the following groups; alkylene, cycloalkylene, arylene, aralkylene, alkylarylene, wherein Z1, Z2, Z3 each represent one of the following groups: -NV16V17-, -NH-(CH2)q-NV16V17 in which V16 and V17, each independently of each other, represent a hydrogen atom or an alkyl group having 1-12 carbon atoms, q has a value from 1-10, an aliphatic or cycloaliphatic epoxide, a carboxylic acid or anhydride group, Z1 or Z2 is a hydrogen atom, in which, however, the compound of formula V may not comprise simultaneously an amine group or not simultaneously an amino group and a carboxylic acid group, or not simultaneously an epoxide group, and a carboxylic acid or anhydride group.

Preferably, the final composition comprises from an effective amount to about 8 percent by weight, and more preferably from about 1 to about 7 percent by weight of the final composition of the siloxane composition.

Additionally, the non-halogen flame retardant material comprises a boron and phosphorus containing material.

Typical phosphorus containing compositions include phosphoric acids, pyro/polyphosphates, and organic esters of phosphinic and phosphonic acids. Phosphoric adds include phosphoric acid, pyrophosphoric acid through metaphosphoric acid having the formula:

(I) Hₘ₊₂PₘO₃ₘ₊₁

Pyro/polyphosphate selected from the group consisting of metal pyrophosphates, metal polyphosphates, metal acid pyrophosphates, metal acid polyphosphates, and mixtures thereof. Preferably the pyro/polyphosphate has the formula (I):

(I) M^{z} ₓH_{y}PₙO₃ₙ₊₁

wherein M is a metal, x is a number from 1 to 12, y is a number from 0 to 12, n is a number from 2 to 10, z is a number from 1 to 5 and the sum of (xz)+y is equal to n+2. M is preferably a Group IA, IIA, IB or IIB metal and more preferably sodium or potassium. These compounds include, for example, pyrophosphates of the formula Na₃HP₂O₇; K₂H₂P₂O₇; Na₃H₂P₂O₁₀; KNaH₂P₂O₇ and Na₂H₂P₂O₇ or sodium hexameta phosphate, Na₈P₆O₁₉. Typically, the metal pyro/polyphosphates are hydrates and may be in powder form. Sodium acid pyrophosphate is the most preferred.

Other phosphorus containing compositions include the organic esters of phosphinic and phosphonic acids having the following general formula: 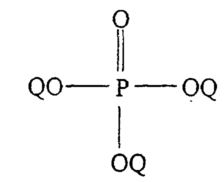 wherein each Q represents the same or different radicals including hydrocarbon radicals such as alkyl, cycloalkyl, aryl, alkyl substituted aryl and aryl substituted alkyl, halogen; hydrogen and combinations thereof provided that at least one Q is an organic radical. Typical examples of phosphates include triphenyl phosphene oxide, phenylbis-dodecyl phosphate, phenylbisneopentyl phosphate, phenylethylene hydrogen phosphate.

The phosphorus component is present in the flame retarded molding compositions in an amount effective to enhance the flame retardancy but not in such amount that other essential properties of the molding composition are substantially degraded. Preferably, the final composition comprises from about 0.02 to about 5, and more preferably from about 0.2 to about 1 percent of the phosphorous containing component calculated as atomic phosphorous.

The boron containing component is preferably present in an amount such that the boron content of the polymer composition, calculated as atomic boron, is between 0.02 and 5, preferably between 0.2 and 1 percent by weight. Typical boron compounds include boric acid, metal borates, boron phosphate, perborates and the like. Metal borates and perborates include alkali metal borate (sodium, potassium etc.), alkaline earth borates (calcium, barium and magnesium) and transition metal borates, such as zinc borate. Metal borates and metal perborates are preferably used in anhydrous form.

The most preferred phosphate containing component comprises suitable inorganic phosphates. Typical inorganic phosphates are the alkali metal, including ammonium phosphates, alkali metal hydrogen phosphates, alkali metal pyrophosphates. In the most preferred embodiment, the boron compound and the inorganic phosphate are combined as boron phosphate.

The organoclay is present in an amount effective for enhancing the flame retardant effect of the flame retardant combination of polymeric silicone and the phosphorous and boron containing component. An organoclay is an inorganic clay to which organic structures have been chemically bonded. The surfaces of the inorganic clay particles have lattice-like arrangement and are negatively charged.

The preferred organoclay compositions are as set forth in U.S. patent 5,530,052 to Takekoshi et al and comprise silicate minerals that have undergone a cation exchange with at least one heteraromatic cation comprising a positively charged organo-substituted heteroatom and/or at least one positively charged herteroatom not part of an aromatic ring with at least one bond having a bond order greater than one. The description of the above U.S. patent, particularly column 2, line 37, to column 5, line 63 is incorporated by reference into the present specification. Illustrative of layered minerals include the kaolinite group and the montmorillonite group. The former group can include kaolinite, halloysite, dikite, nacrite and the like. The latter group can include montmorillonite, nontronite, beidellite, hectorite, saponite and the like. The heteroaromatic cations comprise at least one positively charged heteroatom not part of an aromatic ring with at least one bond having a bond order greater than one. Preferred heteraromatic cations comprise N-organo-substituted salts of pyrrole, imidazole, thiazole, oxazole, pyridine, pyrimidine, quinoline, isoquinoline, indole, purine, benzimidozole, benzothiazole, benzoxazole, pyrazine, quinnoxaline, quinazokine, acridine, phenazine, imidazopyridine, dipyridyl and the like.

The organo clay is preferably used in an amount effective to reduce the flammability of molded polyester resin. The amount will vary with the nature of the resin and with the efficiency of the additive. In general, however, the amount of additive will be from 0.01 to 5 percent by weight based on the total weight of the composition. A preferred range will be from about 0.1 to 3 percent, and more preferably 0.2 to 2 percent based on the weight of the total composition.

Polyesters include those comprising structural units of the following formula: 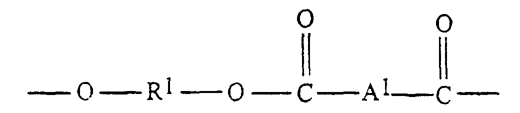 wherein each R¹ is independently a divalent aliphatic, alicyclic or aromatic hydrocarbon or polyoxyalkylene radical, or mixtures thereof and each A¹ is independently a divalent aliphatic, alicyclic or aromatic radical, or mixtures thereof. Examples of suitable polyesters containing the structure of the above formula are poly(alkylene dicarboxylates), liquid crystalline polyesters, and polyester copolymers. It is also possible to use a branched polyester in which a branching agent, for example, a glycol having three or more hydroxyl groups or a trifunctional or multifunctional carboxylic acid has been incorporated. Furthermore, it is sometimes desirable to have various concentrations of acid and hydroxyl end groups on the polyester, depending on the ultimate end-use of the composition.

The R¹ radical may be, for example, a C₂₋₁₀ alkylene radical, a C₆₋₁₂ alicyclic radical, a C₆₋₂₀ aromatic radical or a polyoxyalkylene radical in which the alkylene groups contain about 2-6 and most often 2 or 4 carbon atoms. The A¹ radical in the above formula is most often p- or m-phenylene, a cycloaliphatic or a mixture thereof. This class of polyester includes the poly(alkylene terephthalates). Such polyesters are known in the art as illustrated by the following patents, which are incorporated herein by reference.

| | | | |
|---|---|---|---|
| 2,465,319 | 2,720,502 | 2,727,881 | 2,822,348 |
| 3,047,539 | 3,671,487 | 3,953,394 | 4,128,526 |

Examples of aromatic dicarboxylic acids represented by the dicarboxylated residue A¹ are isophthalic or terephthalic acid, 1,2-di(p-carboxyphenyl)ethane, 4,4'-dicarboxydiphenyl ether, 4,4' bisbenzoic acid and mixtures thereof. Acids containing fused rings can also be present, such as in 1,4- 1,5- or 2,6- naphthalenedicarboxylic acids. The preferred dicarboxylic acids are terephthalic acid, isophthalic acid, naphthalene dicarboxylic acid, cyclohexane dicarboxylic acid or mixtures thereof.

The most preferred polyesters are poly(ethylene terephthalate) ("PET"), and poly(1,4-butylene terephthalate), ("PBT"), poly(ethylene naphthanoate) ("PEN"), poly(butylene naphthanoate), ("PBN") and (polypropylene terephthalate) ("PPT"), and mixtures thereof.

Also contemplated herein are the above polyesters with minor amounts, e.g., from about 0.5 to about 5 percent by weight, of units derived from aliphatic acid and/or aliphatic polyols to form copolyesters. The aliphatic polyols include glycols, such as poly(ethylene glycol) or poly(butylene glycol). Such polyesters can be made following the teachings of, for example, U.S. Pat. Nos. 2,465,319 and 3,047,539.

The preferred poly(1,4-butylene terephthalate) resin used in this invention is one obtained by polymerizing a glycol component at least 70 mol %, preferably at least 80 mol %, of which consists of tetramethylene glycol and an acid or ester component at least 70 mol %, preferably at least 80 mol %, of which consists of terephthalic acid, and polyester-forming derivatives therefore.

The polyesters used herein have an intrinsic viscosity of from about 0.4 to about 2.0 dl/g as measured in a 60:40 phenol/tetrachloroethane mixture or similar solvent at 23°-30° C. Preferably the intrinsic viscosity is 1.1 to 1.4 dl/g. VALOX Registered TM 315 polyester is particularly suitable for this invention.

In preferred embodiments of the present invention the composition includes a charring polymer. The polyesters are generally characterized as non-charring since the mode of failure when subject to flame test under UL 94 is by dripping. With other resins, characterized as charring resins, the mode of failure when subject to the flame test under UL 94 is by charring. Resins such a polycarbonate and polyethylene oxide are characterized as charring since they char when subjected to the flame test. The preferred charring polymers utilized in the present invention are polycarbonate and polyethylene oxide. Preferably the charring polymer is present in the final composition in an amount from 5 to about 70, and more preferably from 20 to about 60 percent by weight. When the thermoplastic resin composition comprises an aromatic polycarbonate resin present, it is most preferably present at a level of from 35 to 85 percent by weight based on the total weight of the material with the polyester resin being present at a level of from 5 to 45 percent by weight based on the total weight of the thermoplastic resin composition. When the thermoplastic resin composition comprises an polyphenylene ether resin present, it is preferably present at a level of from 35 to 85 percent by weight based on the total weight of the material with the polyester resin present at a level of from 5 to 45 percent by weight based on the total weight of the thermoplastic resin composition.

Polycarbonate resins useful as the charring resin component are generally aromatic polycarbonate resins. Typically these are prepared by reacting a dihydric phenol with a carbonate precursor, such as phosgene, a haloformate or a carbonate ester. Generally speaking, such carbonate polymers may be typified as possessing recurring structural units of the formula 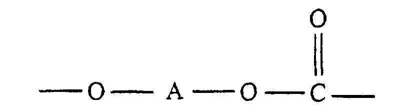 wherein A is a divalent aromatic radical of the dihydric phenol employed in the polymer producing reaction. The dihydric phenol which may be employed to provide such aromatic carbonate polymers are mononuclear or polynuclear aromatic compounds, containing as functional groups two hydroxy radicals, each of which is attached directly to a carbon atom of an aromatic nucleus. Typical dihydric phenols are: 2,2-bis(4-hydroxyphenyl) propane; hydroquinone; resorcinol; 2,2-bis(4-hydroxyphenyl) pentane; 2,4'-(dihydroxydiphenyl) methane; bis(2-hydroxyphenyl) methane; bis(4-hydroxyphenyl) methane; 1,1-bis(4-hydroxyphenyl)-3,3,5-trimethylcyclohexane; fluorenone bisphenol, 1,1-bis(4-hydroxyphenyl) ethane; 3,3-bis(4-hydroxyphenyl) pentane; 2,2'-dihydroxydiphenyl; 2,6-dihydroxynaphthalene; bis(4-hydroxydiphenyl)sulfone; bis(3,5-diethyl-4-hydroxyphenyl)sulfone; 2,2-bis(3,5-dibromo-4-hydroxyphenyl)propane; 2,2-bis(3,5-dimethyl-4-hydroxyphenyl)propane; 2,4'-dihydroxydiphenyl sulfone; 5'-chloro-2,4'-dihydroxydiphenyl sulfone; 4,4'-dihydroxydiphenyl ether; 4,4'-dihydroxy-3,3'-dichlorodiphenyl ether, and the like.

Other dihydric phenols which are also suitable for use in the preparation of the above polycarbonates are disclosed in U.S. Pat Nos. 2,999,835; 3,038,365; 3,334,154; and 4,131,575.

These aromatic polycarbonates can be manufactured by known processes, such as, for example and as mentioned above, by reacting a dihydric phenol with a carbonate precursor, such as phosgene, in accordance with methods set forth in the above-cited literature and in U.S. Pat. No. 4,123,436, or by transesterification processes such as are disclosed in U.S. Pat. No. 3,153,008, as well as other processes known to those skilled in the art.

It is also possible to employ two or more different dihydric phenols or a copolymer of a dihydric phenol with a glycol or with a hydroxy- or acid-terminated polyester or with a dibasic acid or hydroxy acid in the event a carbonate copolymer or interpolymer rather than a homopolymer is desired for use in the preparation of the polycarbonate mixtures of the invention. Polyarylates and polyester-carbonate resins or their blends can also be employed. Branched polycarbonates are also useful, such as are described in U.S. Pat. No. 4,001,184. Also, there can be utilized blends of linear polycarbonate and a branched polycarbonate. Moreover, blends of any of the above materials may be employed in the practice of this invention to provide the aromatic polycarbonate.

In any event, the preferred aromatic carbonate for use in the practice in the present invention is a homopolymer, e.g., a homopolymer derived from 2,2-bis(4-hydroxyphenyl)propane (bisphenol-A) and phosgene, commercially available under the trade designation LEXAN Registered TM from General Electric Company.

The instant polycarbonates are preferably high molecular weight aromatic carbonate polymers having an intrinsic viscosity, as determined in chloroform at 25° C of from about 0.3 to about 1.5 dl/gm, preferably from about 0.45 to about 1.0 dl/gm. These polycarbonates may be branched or unbranched and generally will have a weight average molecular weight of from about 10,000 to about 200,000, preferably from about 20,000 to about 100,000 as measured by gel permeation chromatography.

The branched polycarbonates may be prepared by adding a branching agent during polymerization. These branching agents are well known and may comprise polyfunctional organic compounds containing at least three functional groups which may be hydroxyl, carboxyl, carboxylic anhydride; haloformyl and mixtures thereof. Specific examples include trimellitic acid, trimellitic anhydride, trimellitic trichloride, tris-p-hydroxy phenyl ethane, isatin-bis-phenol,tris-phenol TC (1,3,5-tris((p-hydroxyphenyl)isopropyl)benzene),tris-phenol PA (4(4(1,1-bis(p-hydroxyphenyl)-ethyl)alpha, alpha-dimethyl benzyl)phenol), 4-chloroformyl phthalic anhydride, trimesic acid and benzophenone tetracarboxylic acid. The branching agent may be added at a level of about 0.05-2.0 weight percent. Branching agents and procedures for making branched polycarbonates are described in U.S. Letters Pat. Nos. 3,635,895; 4,001,184; and 4,204,047 which are incorporated by reference.

All types of polycarbonate end groups are contemplated as being within the scope of the present invention.

Pholyphenylene ethers may also be utilized as a char forming resin. The polyphenylene ethers employed are typically prepared by the oxidative coupling of at least one monohydroxyaromatic compound such as 2,6-xylenol or 2,3,6-trimethylphenol. Catalyst systems are generally employed for such coupling; they typically contain at lest one heavy metal compound such as copper, manganese or cobalt compound, usually in combination with various other materials.

Furthermore, polypheneylene ethers suitable for use in the practice of the present invention may be prepared by any of number of processes utilizing precursor corresponding phenols or derivatives thereof. Examples are disclosed in U.S. Patents 3,306.874' 3.306,875; 3,257,357; 3,257,358; 3,337,501; and 3,787,361, all incorporated herein by reference.

Additional useful polyphenylene ethers are those which comprise molecules having at least one aminoalkyl-containing end group. The aminoalkyl radical is typically located in an ortho position to the hydroxy group. Products containing such end groups may be obtained by incorporating an appropriate primary or secondary monoamine such as di-n-butyleamine or dimethylamine as one of the constituents of the oxidative coupling reaction mixture. Also frequently present are 4-hydroxybiphenyl end groups, typically obtained from reaction mixtures in which a by-product diphenoquinoe is present, especially in a copper-halide-secondary or tertiary amine system. A portion of the polymer molecules may contain at least one of said aminoalkyl-containing and 4-hydroxybiphenyl end groups.

Glass fiber reinforcing agents increase the strength of molded resin. The glass fiber or filamentous glass is desirable employed as reinforcement in the present compositions. For compositions ultimately to be employed for electrical uses, it is preferred to use fibrous glass filaments comprised of lime-aluminum borosilicate glass that is relatively soda-free. This is known as "E" glass. However, other glasses are useful where electrical properties are not so important, e.g., the low soda glass known as "C" glass. The filaments are made by standard processes, e.g., by steam or air blowing, flame blowing and mechanical pulling. The preferred filaments for plastic reinforcement are made by mechanical pulling. The filament diameters range from about 0.00012 to 0.00075 inch but this is not critical to the present invention.

The length of the glass filaments and whether or not they are bundled into fibers and the fibers bundled in turn to yarns, ropes or rovings, or woven into mats and the like are also not critical to the invention. However, in preparing the molding compositions it is convenient to use the filamentous glass in the form of chopped strands of from about 1/8 " to about 2" long. In articles molded from the compositions on the other hand, even shorter lengths will be encountered because, during compounding considerable fragmentation will occur. This is desirable, however, because the best properties are exhibited by thermoplastic injection molded articles in which the filament lengths lie between about 0.000005" and 0.125 (1/8").

In general, fillers comprise from about 5 to about 50% by weight based on the combined weight of filler and resin, and preferably from about 10 to about 30% by weight. It is especially preferred that the filler comprise from about 15 to about 25% by weight based on the combined weight of filler and resin.

Most preferably, a portion of the organoclay is premixed with at least a portion of the polyester resin to form a master batch and the master batch is then mixed with the char forming resin and additional ingredients. The method of blending the compositions of this invention, including the master batch with the remaining ingredients, is not critical and can be carried out by conventional techniques. One convenient method comprises blending the polyester and other ingredients in powder or granular form, extruding the blend and comminuting into pellets or other suitable shapes.

The ingredients are combined in any usual manner, e.g., by dry mixing or by mixing in the melted state in an extruder, on a heated mill or in other mixers.

By way of illustration, chopped glass (glass rovings which have been chopped into small pieces, e.g. 1/8 to 1 inch in length, and preferably less than ¼ inch in length) is put into an extrusion compounder with the polkyester resin, other ingredients, and optionally, other additive(s) to produce molding pellets. The fibers are shortened and predispersed in the process, coming out at less than 1/16 inch long. In another procedure, glass filaments are ground or milled to short lengths, and are mixed with the polyester resin and stabilizers, and, optionally other additive(s), by dry blending then either fluxed or a mill and ground, or they are extruded and chopped. The glass fibers can also be mixed with resin and additives and directly molded, e.g. by injection or transfer molding techniques.

Other ingredients typically employed in amounts less than 10 percent by weight of the total composition, preferably less than 5 percent by weight. Such additional ingredients include anti-dripping agents, lubricants, heat stabilizers, and other additives to enhance the properties of the resin. Typically, the transesterification inhibitors are used in amounts from 0.01 percent to 0.5 percent by weight and include monozinc phosphate, zinc phosphate, or other type inhibitor. Conventional stabilizer additives may be preferably utilized in amounts from 0.01 to 5 percent by weight of the total composition.

It is always important to thoroughly free all of the ingredients, the polyester resin and other ingredients from as much water as possible.

Although it is not essential, best results are obtained if the ingredients are precompounded, pelletized and then molded. Precompounding can be carried out in conventional equipment. For example, after carefully predrying the polyester resin, other ingredients, and, optionally, other additives and/or reinforcements, a single screw extruder is fed with a dry blend of the composition, the screw employed having a long transition section to insure proper melting. On the other hand, a twin screw extrusion machine e.g., a Werner Pfleiderer machine can be fed with resins and additives at the feed port and reinforcement down stream. In either case, a generally suitable machine temperature will be about 450° to 575° F.

The precompounded composition can be extruded and cut or chopped into molding compounds, such as conventional granules, pellets, etc. by standard techniques.

The compositions can be molded in any equipment conventionally used for thermoplastic compositions. For example, good results will be obtained in an injection molding machine, e.g. of the Engel type, at conventional temperatures, e.g., 240 to 260 degrees Centigrade. If necessary, depending on the molding properties of the polyester, the amount of additives and/or reinforcing filler and the rate of crystallization of the polyester component, those skilled in the art will be able to make the conventional adjustments in molding cycles to accommodate the composition.

The present invention shall now be illustrated more concretely by means of the examples presented below, although it shall be understood that these examples in no way restrict the scope of the invention.

In the Examples, the following ingredients have the following meanings:

SF 1708 - Trimethylsilylamodimethicone available from GE Silicones, has the following formula and includes high amino content (0.8 meq/gr), medium viscosity (1500-3000).

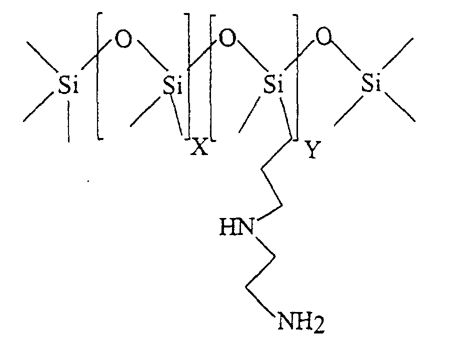

SF 1921 - Branched amino silicone fluid - Trimethylsilylamodimethicone available from GE Silicones, has the following formula and includes amino content (0.1 meq/gr), medium viscosity (150-400).

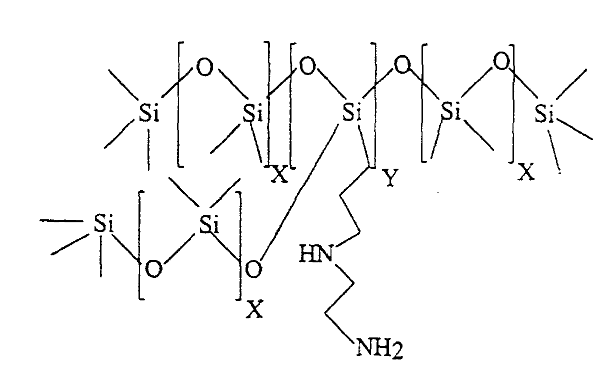

SF 1925 - Branched amino silicone fluid - Trimethylsilylamodimethicone available from GE Silicones, has the following formula and includes amino content (0.5 meq/gr), medium viscosity (150-400). 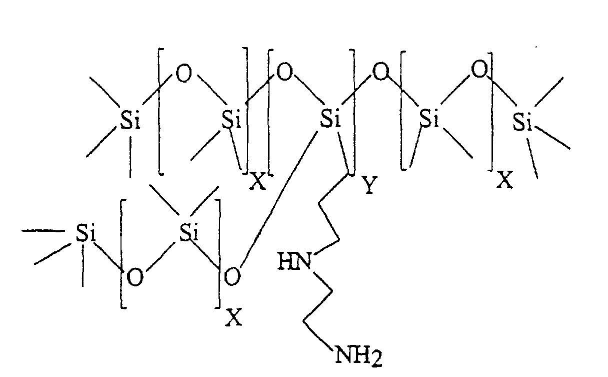
PBT195 and PBT315 (GE Plastics)
PC 125 (GE Plastics)
BPO4 Budit 321, boron orthophosphate, tribasic (Chemische Fabrik Budenheim)
SF1925, SF1706, UV9315 (GE Silicones)
Antioxidant Irganox 1076 (CIBA)
Stabilizer MonoZincPhosphate (C.N. Schmidt B.V.; Berkimpex France)
Release agent PETS (pentaerythritol tetrastearate) Glycolube P(ETS) (Lonza) or Loxiol EP8578 (Henkel) or PETS G (FACI)
Glass Fiber (Owens Corning)
Claytone HY is montmorrilonite cation exchanged with N,N-dimethyl-N,N-di(hydrogenated tallow)ammonium cation
SCPX-896 is mmontmorrilonite cation exchanged with N-methyl-N,N-di(hydroxyethyl)-N-hydrogenated tallow ammonium cation
Both clays are available from Southern Clay Products
Masterbatch 1 consists of 1% SCPX-896 and 99% PBT (63% PBT195 + 36% PBT 315)
Masterbatch 2 consists of 1% Claytone HY and 99% PC125
Masterbatch 3 consists of 10% Cloysite and 90% PBT195
Masterbatch 4 consists of 10% SCPX-896 and 90% PBT195

All masterbatches were prepared by mixing the components in a mixer, followed by extrusion on a twin-screw extruder under standard processing conditions for PBT.

Table 1 contains comparative examples A-C, containing PC and several amounts of BPO4 and Si-fluid SF1925.

Table 2 contains examples of formulations similar to those of Table 1 (PC, BPO4 and SF1925) but organoclays are used (two different types).

Table 3 contains examples of the invention with formulations containing PC, BPO4, Si-fluid SF1925 and organoclay/polymer masterbatches. When comparing sheet 2 and 3 we can see that the use of organoclay/PBT masterbatches is more effective in FR performance.

Table 1 gives formulations to compare the influence of PC (as charformer) and organoclays.

Table 5 gives glass filled formulations to which organoclay or organoclay/PBT-masterbatch is added.

**TABLE 1 -**

| Comparative examples | | | |
|---|---|---|---|
| | A | B | C |
| PBT315 | 17.21 | 17.21 | 16.1 |
| PBT195 | 30.24 | 29.24 | 28.35 |
| PC125 | 48 | 47 | 45 |
| BPO4 | 2 | 3 | 5 |
| Si-fluid SF1925 | 2 | 3 | 5 |
| Stabilizer MZP | 0.2 | 0.2 | 0.2 |
| Antioxidant 1076 | 0.15 | 0.15 | 0.15 |
| Release agent PETS | 0.2 | 0.2 | 0.2 |
| | | | |
| PBT/PC ratio | 50/50 | 50/50 | 50/50 |
| | | | |
| UL94 (3.2 mm) | HB | HB | V2 |
| Flame-out time (s) | 16.4 | 8.5 | 6.2 |
| Second flame-out time (s) | 42.2 | 41 | 15.6 |
| Comments | 1 bar dripped | 2 bars dripped | 2 bars dripped |
| | which ignited | which ignited | which ignited cotton |
| | cotton | cotton | |
| UL94 (1.6 mm) | not measured | HB | HB |
| Flame-out time (s) | - | 70 | 52.8 |
| Second flame-out time (s) | - | - | 17.5 |
| Comments | - | bars burned | 3 bars dripped |
| | | up to clamp | 2 bars burned up to |
| | | | clamp |
| GWT (850°C@2.5 mm) | Not passed | Passed | Passed |
| Flame-out time (s) | 120 | 18.5 | 19 |
| GWT (960°C@3.2 mm) | not measured | Passed | Passed |
| Flame-out time (s) | - | 19.2 | 16.0 |

**TABLE 2 -**

| Formulations containing organoclays | | | |
|---|---|---|---|
| | 1 | 2 | 3 |
| PBT315 | 17.38 | 17.38 | 17.38 |
| PBT195 | 29.59 | 29.59 | 28.61 |
| PC125 | 48 | 48 | 47 |
| BPO4 | 2 | 2 | 3 |
| Si-oil SF1925 | 2 | 2 | 3 |
| Claytone HY | 0.48 | | |
| SCPX-896 | | 0.48 | 0.46 |
| Stabilizer MZP | 0.2 | 0.2 | 0.2 |
| Antioxidant 1076 | 0.15 | 0.15 | 0.15 |
| Release agent PETS | 0.2 | 0.2 | 0.2 |
| | | | |
| PBT/PC ratio | 50/ 50 | 50/50 | 50/50 |
| | | | |
| UL94 (3.2 mm) | HB | HB | V1 |
| Flame-out time (s) | 8.4 | 7.2 | 3.2 |
| Second flame-out time | 25.8 | 52.0 | 7.2 |
| (s) | | | |
| Comments | - | drip ignited cotton | - |
| UL94 (1.6 mm) | not measured | not measured | HB |
| Flame-out time (s) | - | - | 25.6 |
| 2nd flame-out time (s) | - | - | 5.2 |
| Comments | - | - | drip ignited cotton |
| GWT (850°C@2.5 mm) | Not passed | Not passed | Passed |
| Flame-out time (s) | 47.8 | 25.6 | 5.8 |
| GWT (960°C@3.2 mm) | not measured | Passed | Passed |
| Flame-out time (s) | - | 19.4 | 9.6 |

**TABLE 3 -**

| 50/50 PBT/PC formulations containing organoclays/PBT masterbatches | | | | | | |
|---|---|---|---|---|---|---|
| | 4 | 5 | 6 | 7 | 8 | 9 |
| PBT315 | | 17.21 | | 17.21 | 17.21 | 16.71 |
| PBT195 | | 30.24 | | 24.54 | 24.54 | 24.04 |
| PC125 | 48 | | 47 | 47 | 47 | 46 |
| BPO4 | 2 | 2 | 3 | 3 | 3 | 4 |
| Si-oil SF1925 | 2 | 2 | 3 | 3 | 3 | 4 |
| Masterbatch #1 | 47.45 | | 46.45 | | | |
| Masterbatch #2 | | 48 | | | | |
| Masterbatch #3 | | | | 4.7 | | |
| Masterbatch #4 | | | | | 4.7 | 4.7 |
| Stabilizer MZP | 0.2 | 0.2 | 0.2 | 0.2 | 0.2 | 0.2 |
| Antioxidant 1076 | 0.15 | 0.15 | 0.15 | 0.15 | 0.15 | 0.15 |
| Release agent PETS | 0.2 | 0.2 | 0.2 | 0.2 | 0.2 | 0.2 |
| | | | | | | |
| UL94 (3.2 mm) | V1 | V2 | V0 | V1 | V0 | V0 |
| Flame-out time (s) | 4.6 | 7.8 | 2.8 | 4.0 | 3.6 | 3.0 |
| Second flame-out time | 14.0 | 16.0 | 5.0 | 6.8 | 5.4 | 3.6 |
| (s) | | | | | | |
| Comments | - | 4 bars | - | - | - | - |
| | | dripped | | | | |
| | | which ignited | | | | |
| | | cotton | | | | |
| UL94 (1.6 mm) | HB | not measured | V2 | HB | HB | V1 |
| Flame-out time (s) | 42 | - | 11.8 | 24.2 | 37.2 | 8.2 |
| Second flame-out time | | - | 13.8 | 13.6 | 10.3 | 6.6 |
| (s) | | | | | | |
| Comments | bars | - | 3 bars | 2 bars | 3 bars | 4 bars |
| | burned | | dripped | dripped parts | dripped | dripped parts |
| | | | parts | | parts | |
| | up to | | which | which ignited | which | which |
| | clamp | | ignited | cotton | ignited | did not |
| | | | cotton | | cotton | |
| | | | | | | ignite cotton |
| GWT (850°C@2.5 mm) | Passed | Passed | Passed | Passed | Passed | Passed |
| Flame-out time (s) | 19.6 | 20.2 | 1.0 | 2.6 | 5.8 | 2.8 |
| GWT (960°C@3.2 mm) | Passed | Passed | Passed | Passed | Passed | not |
| | | | | | | measured |
| Flame-out time (s) | 22 | 21.6 | 9.0 | 12.2 | 10 | - |
| GWT (850°C@lmm) | not | not | not | Passed | Passed | not |
| | measured | measured | measured | | | measured |
| Flame-out time (s) | - | - | - | <1 | <1 | - |
| GWT (960°C@1 mm) | not | not | not | not | not | not |
| | measured | measured | measured | passed | passed | measured |
| Flame-out time (s) | - | - | - | 45.7 | 48 | - |

**TABLE 4 -**

| Glass-fiber filled formulations containing organoclay/PBT masterbatches | | | | |
|---|---|---|---|---|
| | 10 | 11 | 12 | 13 |
| PBT315 | 11.55 | 11.55 | 11.55 | |
| PBT195 | 20.6 | 20.6 | 19.6 | |
| PC125 | 33 | 33 | 32 | 32 |
| BPO4 | 2 | 2 | 3 | 3 |
| Si-oil SF1925 | 2 | 2 | 3 | 3 |
| SCPX-896 | 0.3 | | 0.3 | |
| Claytone HY | | 0.3 | | |
| Glass fiber | 30 | 30 | 30 | 30 |
| Masterbatch #1 | | | | 31.45 |
| Stabilizer MZP | 0.2 | 0.2 | 0.2 | 0.2 |
| Antioxidant 1076 | 0.15 | 0.15 | 0.15 | 0.15 |
| Release agent PETS | 0.2 | 0.2 | 0.2 | 0.2 |
| | | | | |
| UL94 (3.2 mm) | HB | HB | V1 | V1 |
| Flame-out time (s) | 16.2 | 42.2 | 2.8 | 2.6 |
| Second flame-out time (s) | 33.8 | 23.8 | 7 | 7.6 |
| Comments | - | - | - | - |
| UL94 (1.6 mm) | not measured | not measured | HB | V2 |
| Flame-out time (s) | - | - | 5 | 11.2 |
| 2nd flame-out time (s) | - | - | 23.4 | 18.6 |
| Comments | - | - | 1 bar burned | 1 bar dripped parts |
| | | | up to clamp | which ignited |
| | | | | cotton |
| GWT (850°C@2.5 mm) | Passed | Passed | Pass | Pass |
| Flame-out time (s) | 3.6 | 5.6 | 3.2 | 1.4 |
| GWT (960°C@2.5 mm) | Passed | Passed | Pass | Pass |
| Flame-out time (s) | 4.8 | 4.2 | 5.0 | 4.4 |

**TABLE 5 -**

| Formulations comparing the effect of BPO4, Si-fluid and combination of both on FR performance | | | | | | |
|---|---|---|---|---|---|---|
| | C1 | C2 | C3 | C4 | C5 | C6 |
| PBT315 | 17.95 | 17.02 | 17.02 | 16.1 | 19.8 | 16.1 |
| PBT195 | 31.5 | 29.93 | 29.93 | 28.35 | 34.65 | 28.35 |
| PC125 | 50 | 47.5 | 47.5 | 45 | 35 | 45 |
| BPO4 | | 5 | | 5 | 5 | 5 |
| Si-fluid SF1706 | | | 5 | 5 | 5 | |
| Si-fluid SF1925 | | | | | | 5 |
| Si-fluid UV9315 | | | | | | |
| Stabilizer MZP | 0.2 | 0.2 | 0.2 | 0.2 | 0.2 | 0.2 |
| Antioxidant 1076 | 0.15 | 0.15 | 0.15 | 0.15 | 0.15 | 0.15 |
| Release agent PETS | 0.2 | 0.2 | 0.2 | 0.2 | 0.2 | 0.2 |
| PBT/PC ratio | 50/50 | 50/50 | 50/50 | 50/50 | 60/40 | 50/50 |
| | | | | | | |
| UL94 (3.2 mm) | HB | HB | HB | V0 | V1 | V2 |
| Flame-out time (s) | 107 | 103 | 20 | 3.2 | 5.4 | 6.2 |
| Second flame-out time (s) | - | - | 70 | 3.6 | 5.0 | 15.6 |
| Comments | 5 bars | 5 bars burned | no drips | - | - | 2 bars |
| | burned | | | | | dripped |
| | up to | up to clamp | | | | which ignited |
| | clamp | | | | | cotton |
| UL94 (1.6 mm) | not | not measured | not measured | V1 | HB | HB |
| | measured | | | | | |
| Flame-out time (s) | - | - | - | 9.6 | 16.2 | 52.8 |
| Second flame-out time (s) | - | - | - | 10.6 | 12.6 | 17.5 |
| Comments | - | - | - | - | 2 bars | 3 bars |
| | | | | | dripped | dripped parts |
| | | | | | which | which ignited |
| | | | | | ignited | cotton 2 |
| | | | | | cotton | burned to |
| | | | | | | clamp |
| GWT (850°C@2.5 mm) | not passed | not passed | Not passed | Passed | Passed | Passed |
| Flame-out time (s) | 270 | 265 | 45 | 3.6 | 10.2 | 19.0 |
| GWT (960°C@3.2 mm) | Not | Not passed | Passed | Passed | Passed | Passed |
| | passed | | | | | |
| Flame-out time (s) | 420 | 400 | 13.6 | 9.0 | 11.0 | 16.0 |

**TABLE 6 -**

| 50/50 PBT/PC formulations with 2/2 BPO4/SF1925 and organoclay or organoclay/PBT masterbatch | | | | | |
|---|---|---|---|---|---|
| | D1 | D2 | D3 | D4 | D5 |
| PBT315 | 17.21 | 17.38 | 17.38 | | 17.21 |
| PBT195 | 30.24 | 29.59 | 29.59 | | 30.24 |
| PC125 | 48 | 48 | 48 | 48 | |
| BPO4 | 2 | 2 | 2 | 2 | 2 |
| Si-oil SF1925 | 2 | 2 | 2 | 2 | 2 |
| Claytone HY | | 0.48 | | | |
| SCPX-896 | | | 0.48 | | |
| Masterbatch #1 | | | | 47.45 | |
| Masterbatch #2 | | | | | 48 |
| Stabilizer MZP | 0.2 | 0.2 | 0.2 | 0.2 | 0.2 |
| Antioxidant 1076 | 0.15 | 0.15 | 0.15 | 0.15 | 0.15 |
| Release agent PETS | 0.2 | 0.2 | 0.2 | 0.2 | 0.2 |
| | | | | | |
| UL94 (3.2 mm) | HB | HB | HB | V1 | V2 |
| Flame-out time (s) | 16.4 | 8.4 | 7.2 | 4.6 | 7.8 |
| Second flame-out time (s) | 42.2 | 25.8 | 52.0 | 14.0 | 16.0 |
| Comments | 1 bar dripped parts | - | 1 bar | - | 4 bars |
| | | | dripped | | |
| | | | parts | | |
| | which ignited cotton | | which | | dripped |
| | | | ignited | | which ig- |
| | | | cotton | | nited cotton |
| UL94 (1.6 mm) | not measured | not measured | not | HB | not measured |
| | | | measured | | |
| Flame-out time (s) | - | - | - | 42 | - |
| Comments | - | - | - | bars | - |
| | | | | burned | |
| | | | | up to | |
| | | | | clamp | |
| GWT (850°C@2.5 mm) | Not passed | Not passed | Not passed | Passed | Passed |
| Flame-out time (s) | 120 | 47.8 | 25.6 | 19.6 | 20.2 |
| GWT (960°C@3.2 mm) | not measured | not measured | Passed | Passed | Passed |
| Flame-out time (s) | - | - | 19.4 | 22 | 21.6 |

**TABLE 7 -**

| Formulations with 3/3 BPO4/SF1925 and organoclay/PBT masterbatch | | | | | |
|---|---|---|---|---|---|
| | E1 | E2 | E3 | E4 | E5 |
| PBT315 | 34.23 | 34.23 | 17.21 | | 17.21 |
| PBT195 | 59.22 | 49.82 | 29.24 | | 24.54 |
| PC125 | | | 47 | 47 | 47 |
| BPO4 | 3 | 3 | 3 | 3 | 3 |
| Si-oil SF1925 | 3 | 3 | 3 | 3 | 3 |
| SCPX-896 | | | | | |
| Masterbatch #1 | | 9.4 | | 46.45 | |
| Masterbatch #3 | | | | | 4.7 |
| Masterbatch #4 | | | | | |
| Stabilizer MZP | 0.2 | 0.2 | 0.2 | 0.2 | 0.2 |
| Antioxidant 1076 | 0.15 | 0.15 | 0.15 | 0.15 | 0.15 |
| Release agent PETS | 0.2 | 0.2 | 0.2 | 0.2 | 0.2 |
| PBT/PC ratio | 100/0 | 100/0 | 50/50 | 50/50 | 50/50 |
| UL94 (3.2 mm) | HB | HB | HB | V0 | V1 |
| Flame-out time (s) | 41 | 132 | 8.5 | 2.8 | 4.0 |
| 2nd flame-out time (s) | 73 | | 41 | 5.0 | 6.8 |
| Comments | bars burned | bars burned | 2 bars dripped parts - | | - |
| | up to clamp | up to clamp | which ignited | | |
| | | | cotton | | |
| UL94 (1.6 mm) | not measured | not measured | HB | V2 | HB |
| Flame-out time (s) | - | - | 70 | 11.8 | 24.2 |
| 2nd flame-out time (s) | - | - | - | 13.8 | 13.6 |
| Comments | - | - | bars burned | 3 bars | 2 bars |
| | | | | dripped | dripped |
| | | | | parts | parts |
| | | | up to clamp | which | which |
| | | | | ignited | ignited |
| | | | | cotton | cotton |
| GWT (850°C@2.5 mm) | Not passed | Not passed | Passed | Passed | Passed |
| Flame-out time (s) | 360 | 360 | 18.5 | 1.0 | 2.6 |
| GWT (960°C@3.2 mm) | not measured | not measured | Passed | Passed | Passed |
| Flame-out time (s) | - | - | 19.2 | 9.0 | 12.2 |

**TABLE 8**

| | F1 | F2 | F3 | F4 |
|---|---|---|---|---|
| PBT315 | 17.11 | 17.11 | 11.45 | 11.45 |
| PBT195 | 24.54 | 24.54 | 16.8 | 16.8 |
| PC125 | 47 | 47 | 32 | 32 |
| BPO4 | 3 | 3 | 3 | 3 |
| Si-oil SF1925 | 3 | 3 | 3 | 3 |
| Glass fiber | | | 30 | 30 |
| Masterbatch #3 | 4.7 | | 3.1 | |
| Masterbatch #4 | | 4.7 | | 3.1 |
| Encapsulated PTFE | 0.1 | 0.1 | 0.1 | 0.1 |
| Stabilizer MZP | 0.2 | 0.2 | 0.2 | 0.2 |
| Antioxidant 1076 | 0.15 | 0.15 | 0.15 | 0.15 |
| Release agent PETS | 0.2 | 0.2 | 0.2 | 0.2 |
| UL94 (3.2 mm) | V1 | V1 | V1 | V0 |
| Flame-out time (s) | 3.4 | 3.8 | 7.0 | 3.0 |
| 2nd flame-out time (s) | 7.0 | 8 | 11.0 | 6.4 |
| Comments | - | - | - | - |
| UL94 (1.6 mm) | HB | HB | V2 | V1 |
| Flame-out time (s) | 30.4 | 23.8 | 17.4 | 12.4 |
| 2nd flame-out time (s) | 8.2 | 6.2 | 13.4 | 9.8 |
| Comments | flame-out time > 30 | 1 bar drip/ig cotton | 1 bar dripped parts | - |
| | | flame-out time > 30 | which ignited cotton | |
| GWT (850°C@2.5 mm) | Passed | Passed | Passed | Passed |
| Flame-out time (s) | 14.2 | 9.8 | 6.0 | 5.0 |
| GWT (960°C@3.2 mm) | Passed | Passed | Passed | Passed |
| Flame-out time (s) | 14.6 | 11.4 | 7.0 | 6.4 |
| GWT (850°C@1 mm) | Passed | Passed | Passed | Passed |
| Flame-out time (s) | <1 | < 1 | 15 | 1 |
| GWT(960°C@1 mm) | Not passed | Not passed | Not passed | Passed |
| Flame-out time (s) | 45 | 49 | 30.4 | 22.7 |

## Claims

1. A flame retarded resin molding composition comprises a polyester resin and a non-halogen containing flame retarding combination of materials comprising at least one polymeric siloxane composition, a boron and phosphorus containing material and an organoclay for enhancing the flame retardant effect of said siloxane composition and said boron and phosphorus containing material

2. A non-halogen flame retarded resin molding composition according to Claim 1 additionally comprising a char forming resin.

3. A non-halogen flame retarded resin molding composition according to Claim 2 wherein said char forming resin comprises a polycarbonate or polyphenylene ether resin.

4. A non-halogen flame retarded resin molding composition according to any preceding claim wherein portion of the said organo clay is mixed with at least a portion of said polyester resin to form a master batch prior to mixing said polyester with said char forming resin.

5. A non-halogen flame retarded resin molding composition according to any preceding claim wherein said siloxane composition comprises a polysiloxane polymer.

6. A non-halogen flame retarded resin molding composition according to any preceding claim wherein said siloxane composition comprises a siloxane selected from a poly(dialkyl-siloxane) which has the following formula: 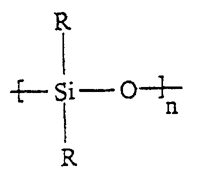 where R is alkyl of 1 to 6 carbon atoms, n is selected so that the molecular weight of the polymer is preferably from about 50 to about 500; a polymeric siloxane compound having 1 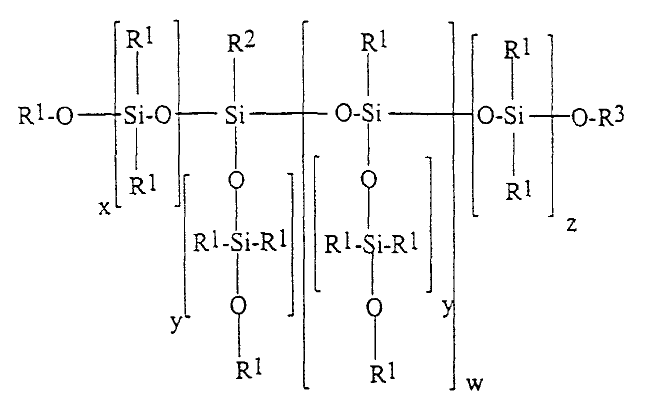 wherein each R1 is independently a C1-5 alkyl group, R2 is a C1-5 alkyl group or a primary or secondary amino group, R3 is hydrogen or a C1-5 alkyl group, W is 0 or 1 and x and y are each independently an integer from 1 to 7 and z is an integer from 0 to 7; a polymeric siloxane compound represented by the formulae: 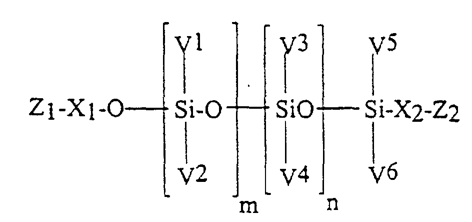 and 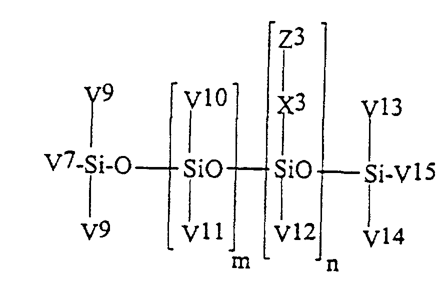 n m+n has a value of 5-2000, V1-V15, each independently of each other, represent a hydrogen atom or one of the following groups having 1-12 carbon atoms: alkyl, alkoxy, alkeneyl, aryl, aralkyl, alkylaryl, which groups may be halogenated; wherein X1, X2, X3, each independently of each other, represent one of the following groups; alkylene, cycloalkylene, arylene, aralkylene, alkylarylene, wherein Z1, Z2, Z3 each represent one of the following groups: -NV16V17-, -NH-(CH2)q-NV16V17 in which V16 and V17, each independently of each other, represent a hydrogen atom or an alkyl group having 1-12 carbon atoms, q has a value from 1-10, an aliphatic or cycloaliphatic epoxide, a carboxylic acid or anhydride group, Z1 or Z2 is a hydrogen atom, in which, however, the compound of formula V may not comprise simultaneously an amine group or not simultaneously an amino group and a carboxylic acid group, or not simultaneously an epoxide group, and a carboxylic add or anyhdride group.

7. A non-halogen flame retarded resin molding composigion according to any preceding claim wherein said phosphorus containing compositions include phosphoric acids, pyro/polyphosphates, and organic esters of phosphinic and phosphonic acids.

8. A non-halogen flame retarded resin molding composition according to claim 7 wherein said phosphorus containing compound includes phosphoric acid, pyrophosphoric acid through metaphosphoric acids having the formula;
Hₘ₊₂PₘO₃ₘ₊₁;
pyro/polyphosphate selected from the group consisting of metal pyrophosphates, metal polyphosphates, metal acid pyrophosphates, metal acid polyphosphates, and mixtures thereof; and compositions having the formula:
M^{z}xH_{y}PₙO₃ₙ₊₁
wherein M is a metal, x is a number from 1 to 12, y is a number from o to 12, n is a number from 2 to 10, z is a number from 1 to 5 and the sum of (xz)+y is equal to n+2.

9. A non-halogen flame retarded resin molding composition according to any preceding claim wherein said boron containing component is preferably present in an amount such that the boron content of the polymer composition, calculated as atomic boron, is between 0.02 and 5, preferably between 0.2 and 1 percent by weight.

10. A non-halogen flame retarded resin molding composition according to any preceding claim wherein said boron containing component comprises boric acid, metal borates, boron phosphate and perborates.

## Patentansprüche

1. Entflammungsgehemmte Harzformmasse, umfassend ein Polyesterharz und eine kein Halogen enthaltende entflammungshemmende Kombination von Materialien, umfassend mindestens eine polymere Siloxan-Zusammensetzung, ein bor- und phosphorhaltiges Material und einen Organoton zur Förderung der flammhemmenden Wirkung der Siloxan-Zusammensetzung und des bor- und phosphorhaltigen Materials.

2. Halogenfreie flammgehemmte Harzformmasse nach Anspruch 1, die zusätzlich ein Kohle bildendes Harz enthält.

3. Halogenfreie flammgehemmte Harzformmasse nach Anspruch 2, worin das Kohle bildende Harz ein Polycarbonat- oder Polyphenylenetherharz umfasst.

4. Halogenfreie flammgehemmte Harzformmasse nach einem vorhergehenden Anspruch, worin ein Teil des Organotones mit mindestens einem Teil des Polyesterharzes vermischt ist, um vor dem Vermischen des Polyesters mit dem Kohle bildenden Harz einen Masterbatch zu bilden.

5. Halogenfreie flammgehemmte Harzformmasse nach einem vorhergehenden Anspruch, worin die Siloxan-Zusammensetzung eine Polysiloxanpolymer umfasst.

6. Halogenfreie flammgehemmte Harzformmasse nach einem vorhergehenden Anspruch, worin die Siloxan-Zusammensetzung ein Siloxan umfasst, ausgewählt aus einem Poly(dialkylsiloxan) mit der folgenden Formel: 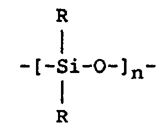 worin R Alkyl mit 1 bis 6 Kohlenstoffatomen ist, n derart ausgewählt ist, dass das Molekulargewicht des Polymers vorzugsweise von etwa 50 bis etwa 500 beträgt; einer polymeren Siloxan-Verbindung der Formel: 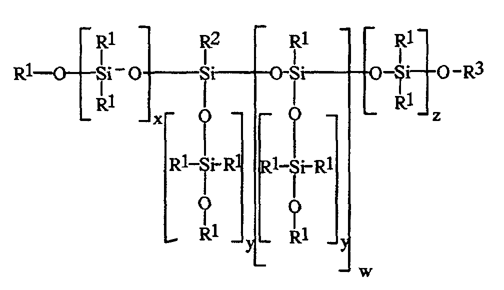 worin jedes R¹ unabhängig eine C₁₋₅-Alkylgruppe ist, R² eine C₁₋₅-Alkylgruppe oder eine primäre oder sekundäre Aminogruppe ist, R³ Wasserstoff oder eine C₁₋₅-Alkylgruppe ist, w 0 oder 1 ist und x und y unabhängig eine ganze Zahl von 1 bis 7 sind, und z eine ganze Zahl von 0 bis 7 ist; einer polymeren Siloxan-Verbindung der Formeln: 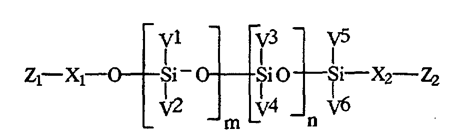 und 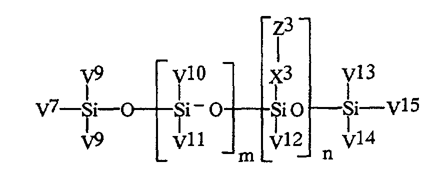 worin m+n einen Wert von 5-2.000 hat, V¹ -V¹⁵ jweils unabhängig voneinander ein Wasserstoffatom oder eine der folgenden Gruppen mit 1 bis 12 Kohlenstoffatomen repräsentiert: Alkyl, Alkoxy, Alkenyl, Aryl, Aralkyl, Alkylaryl, wobei diese Gruppen halogeniert sein können, worin X₁, X₂, X³ jeweils unabhängig voneinander eine der folgenden Gruppen repräsentieren: Alkylen, Cycloalkylen, Arylen, Aralkylen, Alkylarylen, worin Z₁, Z₂, Z³ jeweils eine der folgenden Gruppen repräsentieren: -NV¹⁶V¹⁷-, -NH-(CH₂)_{q}-NV¹⁶V¹⁷, worin V¹⁶ und V¹⁷ jeweils unabhängig voneinander ein Wasserstoffatom oder eine Alkylgruppe mit 1 bis 12 Kohlenstoffatomen repräsentieren, q einen Wert von 1-10 hat, ein aliphatisches oder cycloaliphatisches Epoxid, eine Carbonsäure- oder Anhydridgruppe, Z₁ oder Z₂ ein Wasserstoffatom ist, wobei die Verbindung der Formel V jedoch nicht gleichzeitig eine Aminogruppe oder nicht gleichzeitig eine Aminogruppe und eine Carbonsäuregruppe oder nicht gleichzeitig eine Epoxidgruppe und eine Carbonsäure- oder Anhydridgruppe umfassen darf.

7. Halogenfreie flammgehemmte Harzformmasse nach einem vorhergehenden Anspruch, worin die phosphorhaltigen Zusammensetzungen Phosphorsäuren, Pyro/Polyphosphate und organische Ester der Phosphin- und Phosphonsäure einschließen.

8. Halogenfreie flammgehemmte Harzformmasse nach Anspruch 7, worin die phosphorhaltige Verbindung Phosphorsäure, Pyrophosphorsäure bis Metaphosphorsäuren der Formel:
Hₘ₊₂PₘO₃ₘ₊₁,
Pyro/Polyphosphat, ausgewählt aus der Gruppe bestehend aus Metallpyrophosphaten, Metallpolyphosphaten, Metallsäurepyrophosphaten, Metallsäurepolyphosphaten und deren Mischungen und Zusammensetzungen der Formel einschließt:
M^{z}xH_{y}PₙO₃ₙ₊₁,
worin M ein Metall, x eine Zahl von 1 bis 12, y eine Zahl von 0 bis 12, n eine Zahl von 2 bis 10, z eine Zahl von 1 bis 5 und die Summe von (xz)+y gleich n+2 ist.

9. Halogenfreie flammgehemmte Harzformmasse nach einem vorhergehenden Anspruch, worin die borhaltige Komponente vorzugsweise in einer solchen Menge vorhanden ist, dass der Borgehalt der Polymerzusammensetzung, berechnet als atomares Bor, zwischen 0,02 und 5, vorzugsweise zwischen 0,2 und 1, Gew.-% liegt.

10. Halogenfreie flammgehemmte Harzformmasse nach einem vorhergehenden Anspruch, worin die borhaltige Komponente Borsäure, Metallborate, Borphosphat und Perborate umfasst.

## Revendications

1. Composition ignifugée de résine à mouler, comportant une résine de polyester et une combinaison d'agents ignifugeants non halogénés, constituée d'au moins une composition de siloxane polymère, d'une substance contenant du bore et du phosphore, et d'une argile organo-modifiée qui a pour rôle de renforcer l'effet ignifugeant de ladite composition de siloxane et de ladite substance contenant du bore et du phosphore.

2. Composition ignifugée de résine à mouler sans halogène, conforme à la revendication 1, qui comporte en outre une résine carbonisable.

3. Composition ignifugée de résine à mouler sans halogène, conforme à la revendication 2, dans laquelle ladite résine carbonisable est une résine de polycarbonate ou de poly(phénylène éther).

4. Composition ignifugée de résine à mouler sans halogène, conforme à l'une des revendications précédentes, dans laquelle on mélange une partie de ladite argile organo-modifiée avec au moins une partie de ladite résine de polyester pour en faire un mélange-maître, avant de mélanger ladite résine de polyester avec ladite résine carbonisable.

5. Composition ignifugée de résine à mouler sans halogène, conforme à l'une des revendications précédentes, dans laquelle ladite composition de siloxane comprend un polymère polysiloxane.

6. Composition ignifugée de résine à mouler sans halogène, conforme à l'une des revendications précédentes, dans laquelle ladite composition de siloxane comprend un siloxane choisi parmi :
- un poly(dialkylsiloxane) de formule 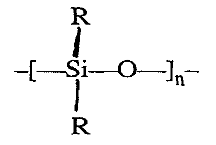 dans laquelle R représente un groupe alkyle comportant de 1 à 6 atomes de carbone, et n est choisi de telle sorte que la masse molaire de ce polymère vaille à peu près de 50 à 500 ;
- un siloxane polymère de formule 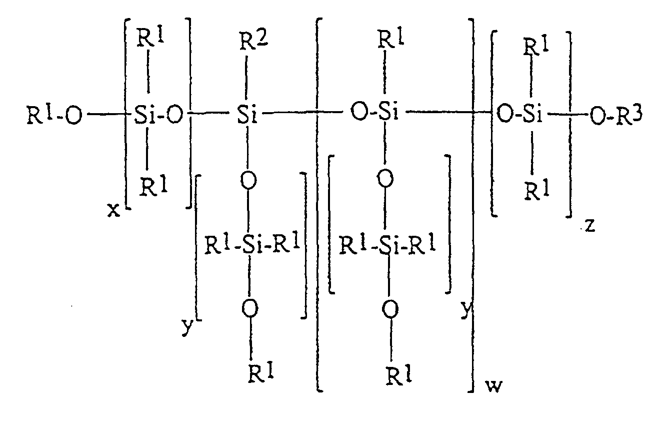 dans laquelle chaque symbole R¹ représente indépendamment un groupe alkyle en C₁₋₅, R² représente un groupe alkyle en C₁₋₅ ou un groupe amino primaire ou secondaire, R³ représente un atome d'hydrogène ou un groupe alkyle en C₁₋₅, w vaut 0 ou 1, x et y représentent chacun, indépendamment, un nombre entier valant de 1 à 7, et z représente un nombre entier valant de 0 à 7 ;
- et un siloxane polymère de formule 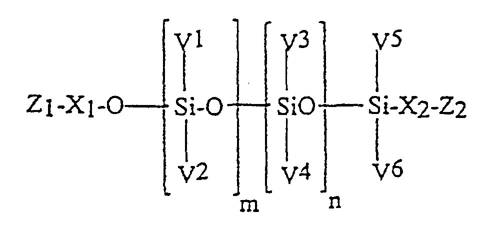 ou 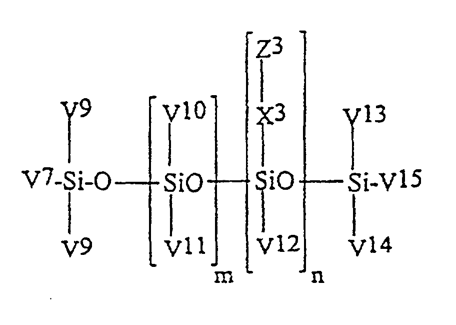 formules dans lesquelles m+n vaut de 5 à 2000, les symboles V¹ à V¹⁵ représentent chacun, indépendamment les uns des autres, un atome d'hydrogène ou un groupe alkyle, alcoxy, alcényle, aryle, aralkyle ou alkaryle, chacun de ces groupes comportant de 1 à 12 atomes de carbone et pouvant être halogéné, X¹, X² et X³ représentent chacun, indépendamment les uns des autres, un groupe alkylène, cycloalkylène, arylène, aralkylène ou alkarylène, Z¹, Z² et Z³ représentent chacun un groupe de formule -NV¹⁶V¹⁷ ou -NH(CH₂)_{q}V¹⁶V¹⁷ où V¹⁶ et V¹⁷ représentent chacun, indépendamment l'un de l'autre, un atome d'hydrogène ou un groupe alkyle comportant de 1 à 12 atomes de carbone et q vaut de 1 à 10, un groupe époxyde aliphatique ou cyclo-aliphatique ou un groupe acide ou anhydride carboxylique, et Z¹ ou Z² représente un atome d'hydrogène, sous réserve que le composé de formule V ne comporte pas simultanément un groupe amine ni simultanément un groupe amino et un groupe acide carboxylique, ni simultanément un groupe époxyde et un groupe acide ou anhydride carboxylique.

7. Composition ignifugée de résine à mouler sans halogène, conforme à l'une des revendications précédentes, dans laquelle ledit composant contenant du phosphore englobe les acides phosphoriques, les pyro/polyphosphates, et les esters organiques d'acides phosphiniques ou phosphoniques.

8. Composition ignifugée de résine à mouler sans halogène, conforme à la revendication 7, dans laquelle ledit composant contenant du phosphore englobe l'acide phosphorique, depuis l'acide pyrophosphorique jusqu'aux acides métaphosphoriques de formule
Hₘ₊₂PₘO₃ₘ₊₁,
un pyro/polyphosphate choisi dans l'ensemble constitué par les pyrophosphates de métal, les polyphosphates de métal, les pyrophosphates acides de métal, les polyphosphates acides de métal et leurs mélanges, ainsi que les composés de formule
M^{z} ₓH_{y}PₙO₃ₙ₊₁
dans laquelle M représente un atome de métal, x représente un nombre valant de 1 à 12, y représente un nombre valant de 0 à 12, n représente un nombre valant de 2 à 10, z représente un nombre valant de 1 à 5, et la somme (x.z) + y est égale à n + 2.

9. Composition ignifugée de résine à mouler sans halogène, conforme à l'une des revendications précédentes, dans laquelle ledit composant contenant du bore se trouve de préférence en une quantité telle que la teneur en bore de la composition de polymère, calculée en bore atomique, vaut de 0,02 à 5 % en poids, et de préférence, de 0,2 à 1 % en poids.

10. Composition ignifugée de résine à mouler sans halogène, conforme à l'une des revendications précédentes, dans laquelle ledit composant contenant du bore englobe l'acide borique, les borates de métal, le phosphate de bore et les perborates.
